(19) Europäisches Patentamt
European Patent Office
Office européen des brevets

(11) EP 1 727 295 A1

(12) **EUROPEAN PATENT APPLICATION**
published in accordance with Art. 158(3) EPC

(43) Date of publication:
**29.11.2006 Bulletin 2006/48**

(21) Application number: **04721712.0**

(22) Date of filing: **18.03.2004**

(51) Int Cl.:
***H04B 3/20*** (2006.01) ***H04M 1/60*** (2006.01)

(86) International application number:
**PCT/JP2004/003613**

(87) International publication number:
**WO 2005/091519 (29.09.2005 Gazette 2005/39)**

(84) Designated Contracting States:
**DE FR GB**

(71) Applicant: **Fujitsu Ltd.**
**Kawasaki-shi, Kanagawa 211-8588 (JP)**

(72) Inventors:
- **OTANI, T.,**
**FUJITSU LIMITED**
**Kawasaki-shi, Kanagawa 2118588 (JP)**
- **TANAKA, M.,**
**FUJITSU LIMITED**
**Kawasaki-shi, Kanagawa 2118588 (JP)**
- **SUZUKI, M.,**
**FUJITSU LIMITED**
**Kawasaki-shi, Kanagawa 2118588 (JP)**

(74) Representative: **HOFFMANN EITLE**
**Patent- und Rechtsanwälte**
**Arabellastrasse 4**
**81925 München (DE)**

# (54) VOICE SPEAKING DEVICE

(57) In a voice communication device in which a control means controls a recording volume adjustment amount for a recording volume adjusting means which adjusts a recording volume of a recording means based on a reproduction volume adjustment amount for a reproduction volume adjusting means which adjusts a reproduction volume of a reproducing means, each adjustment amount is an adjustment absolute amount or an adjustment change amount, and the control means controls the recording volume adjustment amount based on an absolute value or a change amount of the reproduction volume adjustment amount. Also, the control means determines the reproduction volume adjustment amount based on a set reproduction volume.

FIG.1

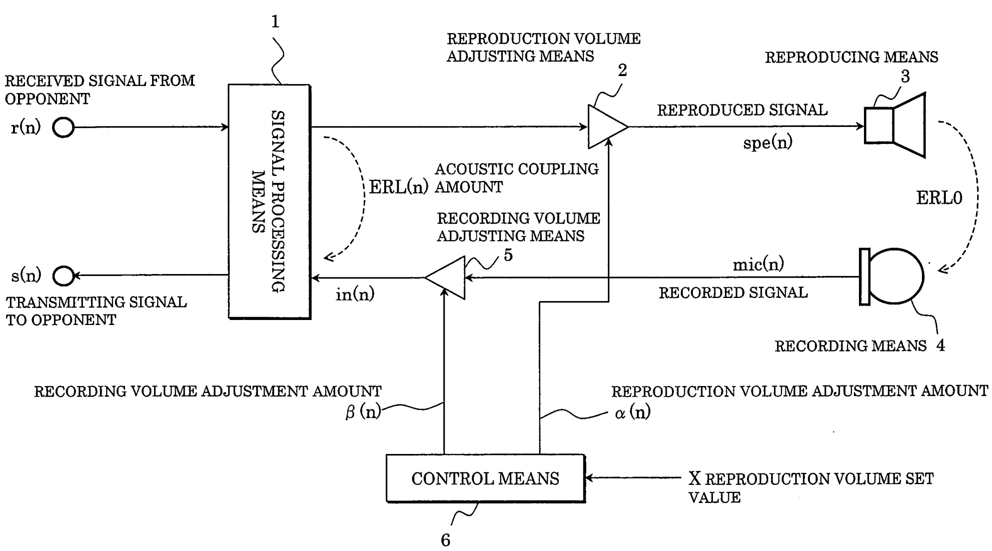




Printed by Jouve, 75001 PARIS (FR)

## Description

Technical Field

The present invention relates to a voice communication device, and in particular to a voice communication (call) device used for a voice communication system such as a mobile telephone, an IP telephone, and an audio conference system.

Background Art

Recently, infrastructure has been improved, thereby enabling high-speed digital lines to be used in offices and houses. Also, by improvements of device technologies, high-performance and inexpensive personal computers have been available on the market and have become widely used in offices and houses. Under these circumstances, a demand for an IP telephone (voice communication system using the Internet) using the personal computers and the high-speed digital lines has increased.

Fig.7 shows a prior art arrangement of a voice communication device used for an IP telephone or the like. This arrangement is provided with a reproduction volume adjusting means (amplifier) 2 and a recording volume adjusting means (amplifier) 5 for manually adjusting respective volumes of a speaker 3 as a reproducing means and a microphone 4 as a recording means.

In this voice communication device, a voice signal r(n), where "n" indicates a time, received from the opponent is transmitted to a talker 300 as an output sound V1 from the speaker 3. Also, a voice V2 of the talker 300 is recorded by the microphone 4 to be transmitted to the opponent as a transmitting signal s(n). Concurrently with this transmission, the voice of the opponent outputted from the speaker 3 is also recorded by the microphone 4 through an echo path to be transmitted to the opponent as an echo E. As a result, it becomes hard for the opponent to listen to the voice of the talker 300.

A signal processing means 1 for removing or suppressing such an echo is provided. The signal processing means 1 has been generally well known as an echo canceller.

The reproduction volume adjusting means 2 is for manually adjusting a level of a speaker signal spe(n) when the speaker signal spe(n) to the speaker 3 is small. If the reproduction volume adjusting means 2 is adjusted at this time so that the reproduction volume from the speaker 3 may become large, the echo E becomes large concurrently. On the other hand, if the reproduction volume from the speaker 3 is made small, the echo E becomes small concurrently. Namely, if the talker 300 changes a set value of the reproduction volume, the echo path also changes as the set value is changed.

Generally, many of the signal processing means 1 with an echo canceller technology use an adaptive signal processing technology such as represented by a learning identification method. When the echo path rapidly changes due to a rapid change of the reproduction volume, it is difficult to completely follow the change. Therefore, a part of the echo E remains and the residual echo components are transmitted to the opponent, which leads to a great deterioration of a voice quality on the opponent side.

Thus, in the prior art voice communication device using only the echo canceller, there has been a problem that if the setting of the reproduction/recording volume adjusting means is rapidly changed, the echo path rapidly changes together with the change of the setting, resulting in the echo residue.

As a voice communication device addressing such a problem, a device shown in Fig.8 has been proposed (see e.g. patent document 1).

In this prior art example, an ERL (Echo Return Loss) measuring means 21 is additionally provided to the prior art example shown in Fig.7. This ERL measuring means 21 is for suppressing the above-mentioned residual echo by adjusting the recording volume adjusting means 5 based on a volume difference between the received signal r(n) (also corresponding to an output signal of the signal processing means 1) and a microphone signal mic(n) from the microphone 4. In this case, the above-mentioned volume difference can be expressed by the following equation:

$$ERL(n) = 10\log_{10}\left(\frac{1}{N}\sum_{n=1}^{N}\left(r(n)\right)^2\right) - 10\log_{10}\left(\frac{1}{N}\sum_{n=1}^{N}\left(mic(n)\right)^2\right) \cdot \cdot \cdot \text{Eq.(1)}$$

Supposing that a reproduction volume adjustment amount (level of the speaker signal spe(n)) by the reproduction volume adjusting means 2 is increased by e.g. 6dB in the above-mentioned Eq.(1), the 1st term of the right-hand side in Eq.(1) is constant. However, when the speaker signal spe(n) is provided to the speaker 3 to be hereby reproduced, the signal level is increased by 6dB similarly, so that the level of the echo E recorded by the microphone 4 (the 2nd term of the right-hand side in Eq.(1)) is also increased by 6dB. As a result, the ERL(n) given by Eq.(1) is to be decreased by the increase amount of the 2nd term of the right-hand side, i.e. 6dB.

The ERL measuring means 21 shown in Fig.8 measures the ERL(n) based on the above-mentioned Eq.(1), and controls the volume of the input signal to the signal processing means 1, i.e. the volume of the transmitting signal s(n) to the opponent, by the recording volume adjusting means 5 according to the change. Namely, in case of the above-mentioned example, the ERL measuring means 21 detects that the ERL(n) is decreased by 6dB, and controls so that the recording volume in the recording volume adjusting means 5 is decreased by 6dB.

Since the control can be performed so that the ERL(n) in the signal processing means 1 may be equal to the value before the reproduction volume adjustment amount is changed, the echo E can be kept from rapidly changing. As a result, the occurrence of the residual echo can be suppressed.

(Patent document 1) Japanese Patent Application Laid-open No.2001-44896

Disclosure of Invention

Although it is a prerequisite for the prior art voice communication device shown in Fig.8 that the ERL(n) is accurately and instantaneously measured, the accurate and instantaneous measurement of the ERL(n) has been extremely difficult for the following reasons:

(1) Echo is recorded by microphone with delay:

Since the voice outputted from the speaker 3, as shown in Fig.9(2), is inputted to the microphone 4 with a delay time A, the microphone signal mic(n) is delayed from the received signal r(n) by a time A as shown in Fig.9(1). Accordingly, in order for the ERL measuring means 21 to accurately measure the ERL(n), it has been required to correct the delay time A between the received signal r(n) and the microphone signal mic(n) and to obtain the volume difference shown in the above-mentioned Eq.(1). Accordingly, since the ERL(n) can be measured only after the delay time A of the echo after the change of the reproduction volume adjustment amount in the reproduction volume adjusting means 2, it has been difficult to instantaneously measure the ERL(n).

(2) Measurement of ERL(n) is difficult in double talk state:

A double talk state is a state B, as shown in Fig.9(1), in which the talker 300 speaks when the received signal r(n) exists. In this double talk state B, the voice of the near-end talker 300 is recorded in addition to the echo E in the microphone 4. Namely, by the influence of the voice of the near-end talker 300, the ERL which can be measured at this time is different from the value of the volume difference between the received signal r(n) and the microphone signal mic(n). Accordingly, it has been difficult to accurately measure the ERL(n) in this double talk state B.

Since the ERL can not be instantaneously and accurately obtained in the prior art example shown in Fig.8, an adequate volume setting can not be obtained until the accurate value of the ERL is obtained, which also leads to the residual echo. Additionally, if the volume control is performed based on a wrong ERL, adverse effects of further increasing the residual echo elements have occurred in some cases.

It is accordingly an object of the present invention to provide a good voice communication device which decreases echo residual components by preventing a change of an echo path even when a reproduction volume adjustment amount is rapidly changed.

In order to achieve the above-mentioned object, a voice communication device according to the present invention comprises: a first adjusting means adjusting a volume of a received signal; a second adjusting means adjusting a volume of a transmitting signal including the received signal having passed through an echo path; and a control means controlling an adjustment amount by the second adjusting means based on an adjustment amount by the first adjusting means.

Namely, in Fig.1 exemplified, the first adjusting means corresponds to a reproduction volume adjusting means 2 adjusting a reproduction volume of a reproduction means 3. The second adjusting means corresponds to a recording volume adjusting means 5 adjusting a recording volume of a recording means 4. A control means corresponds to a control means 6 controlling a recording volume adjustment amount for the recording volume adjusting means 5 based on the reproduction volume adjustment amount for the reproduction volume adjusting means 2.

Hereinafter, the present invention will be described referring to Fig.1. As for a voice r(n) of the opponent outputted from a signal processing means 1, its volume is adjusted by the reproduction volume adjusting means 2 to be outputted from the reproduction means 3. A reproduction volume adjustment amount $\alpha$ (n) for the reproduction volume adjusting means 2 is provided by the control means 6. It is to be noted that the reproduction volume adjustment amount α (n) in this case may be inputted from e.g. an interface by the talker. Alternatively, a reproduction volume set value X automatically calculated from the volume of the received signal r(n) may be used or may be preliminarily stored in the control means 6.

The voice of the opponent outputted from the reproduction means 3 concurrently with the voice of the talker is inputted to a microphone 4 as an echo through the echo path, so that the volume is adjusted by the recording volume adjusting means 5. At this time, a recording volume adjustment amount β (n) for the recording volume adjusting means 5 is determined based on the reproduction volume adjustment amount α (n) by the control means 6.

Accordingly, the residual echo components in an input signal in(n) to the signal processing means 1 depend on the volume adjustment amount α (n) [dB] for the reproduction volume adjusting means 2, the volume adjustment amount β (n) [dB] for the recording volume adjusting means 5, and a fixed acoustic coupling amount $ERL_0$ [dB] between the speaker 3 and the microphone 4. Namely, the ERL(n) [dB] in the signal processing means 1 at a time "n" can be expressed by the following equation:

$$ERL(n) = \alpha(n) + ERL_0 + \beta(n) \qquad \cdot\cdot\cdot \text{Eq.(2)}$$

It is now supposed that the reproduction volume adjustment amount α (n) [dB] is changed from the volume adjustment amount α o [dB] by (+ Δ α) [dB] as of a certain time "m" as shown by the following equation:

$$\alpha(n) = \begin{cases} \alpha_0 & n < m \\ \alpha_0 + \Delta\alpha & n \geq m \end{cases} \qquad \cdot\cdot\cdot \text{Eq.(3)}$$

If such a change amount Δ α [dB] of the reproduction volume adjustment amount is provided to the reproduction volume adjusting means 2, the control means 6, based on the change amount Δ α [dB], changes the recording volume adjustment amount β (n) [dB] for the recording volume adjusting means 5 from the volume adjustment amount $\beta_0$ [dB] by (- Δ α) [dB] at the time "m" as shown by the following equation:

$$\beta(n) = \begin{cases} \beta_0 & n < m \\ \beta_0 + \Delta\beta & n \geq m \end{cases} \qquad \cdot\cdot\cdot \text{Eq.(4-1)}$$

where

$$\Delta\beta = -\Delta\alpha \qquad \cdot\cdot\cdot \text{Eq.(4-2)}$$

The ERL(n) in this case can be obtained from the above-mentioned Eqs.(2)-(4) as shown by the following equation:

$$ERL(n) = \begin{cases} \alpha_0 + ERL_0 + \beta_0 & n < m \\ (\alpha_0 + \Delta\alpha) + ERL_0 + (\beta_0 + \Delta\beta) & n \geq m \end{cases} \qquad \cdot\cdot\cdot \text{Eq.(5)}$$

Eq.(5) can be further rewritten as follows by substituting Eq.(4-2) therefor:

$$ERL(n) = \alpha_0 + ERL_0 + \beta_0 \qquad \cdot\cdot\cdot \text{Eq.(6)}$$

As mentioned above, even if the reproduction volume adjustment amount α (n) in the reproduction volume adjusting means 2 is rapidly changed, the ERL(n) in the signal processing means 1 does not change. Accordingly, it becomes possible to adjust the volume so that the ERL(n) may become fixed without being measured.

As a result, the occurrence of the residual echo due to a reduction of an echo suppressing amount in the signal processing means 1 can be prevented, and a good communication device can be realized. The same completely applies to the double talk state.

It is to be noted that while in the above-mentioned Eq.(3), the volume adjustment amount is expressed by "dB", the received signal is actually multiplied by gain_α(n) [times] by the reproduction volume adjusting means 2 to be reproduced from the speaker. The amount of the gain_α (n) [times] is calculated by the following equation based on α (n) [dB]:

$$\begin{cases} \text{In case of } n < m \quad gain_\alpha(n) = 10^{\alpha_0/20} \\ \text{In case of } n \geq m \quad gain_\alpha(n) = 10^{(\alpha_0+\Delta\alpha)/20} = 10^{\alpha_0/20} \times 10^{\Delta\alpha/20} \end{cases} \quad \cdots \text{Eq.(4-3)}$$

Similarly, in the above-mentioned Eq.(4-1), the recorded signal is multiplied by gain_β (n) [times] by the recording volume adjusting means 5 to be received by the signal processing means 1. The amount of the gain_β (n) [times] is calculated by the following equation based on β(n) [dB].

$$\begin{cases} \text{In case of } n < m \quad gain_\beta(n) = 10^{\beta_0/20} \\ \text{In case of } n \geq m \quad gain_\beta(n) = 10^{(\beta_0+\Delta\beta)/20} = 10^{\beta_0/20} \times 10^{\Delta\beta/20} \end{cases} \quad \cdots \text{Eq.(4-4)}$$

By the simplification of the following Eq.(4-5), the above-mentioned Eqs.(4-3) and (4-4) can be respectively rewritten as the following Eq.(4-6):

$$\begin{cases} 10^{\alpha_0/20} = A \\ 10^{\Delta\alpha/20} = C \\ 10^{\beta_0/20} = B \\ 10^{\Delta\beta/20} = D \end{cases} \quad \cdots \text{Eq.(4-5)}$$

$$\begin{cases} gain_\alpha(n) = A \times C \\ gain_\beta(n) = B \times D \end{cases} \quad \cdots \text{Eq.(4-6)}$$

If Eq.(4-2) is substituted for Eqs.(4-5) and (4-6), the following equations can be obtained:

$$D = 10^{\Delta\beta/20} = 10^{(-\Delta\alpha)/20} = \frac{1}{C} \quad \cdots \text{Eq.(4-7)}$$

$$gain_\beta(n) = B \times \frac{1}{C} \quad \cdots \text{Eq.(4-8)}$$

It has been indicated in the above that a change amount D of the gain_ β (n) is controlled so as to be equal to an inverse number of a change amount C of the gain_α (n). However, the change amount D of the gain_ β (n) may be controlled in inverse proportion as the following equation, instead of Eq.(4-7) or based on the inverse number.

$$D = \frac{L}{C} \quad or \quad D = f\left(\frac{1}{C}\right) \quad \cdots \text{Eq.}(4\text{-}9)$$

where L and f( ) respectively indicate an arbitrary constant and an arbitrary function.

Also, while a method of controlling the recording volume adjustment amount based on the change amount of the reproduction volume adjustment amount has been indicated in the above-mentioned description, it may be controlled based on an absolute amount of the reproduction volume adjustment amount.

Also, the control means 6 may determine the reproduction volume adjustment amount $\alpha$ (n) [dB] based on the reproduction volume set value X.

Furthermore, by providing the transmission volume adjusting means (not shown) for adjusting the volume of the transmitting signal, the control means 6 may determine the transmission volume adjustment amount for the transmission volume adjusting means based on the above-mentioned reproduction volume adjustment amount $\alpha$ (n) [dB]. In this case, it is possible to control the transmission volume adjustment amount based on the inverse number of the recording volume adjustment amount or in inverse proportion to the recording volume adjustment amount, namely so as to be equal to the reproduction volume adjustment amount. Thus, the input signal in(n) [dB] reduced by the recording volume adjusting means 5 can be compensated.

Furthermore, by using a transmission volume set value, the control means 6 may determine the above-mentioned transmission volume adjustment amount.

Furthermore, each of the above-mentioned adjusting means may comprise either a digital amplifier or an analog amplifier.

Brief Description of the Drawings

Fig.1 is a block diagram showing a principle of a voice communication device according to the present invention;
Fig.2 is a block diagram showing a system arrangement with a handsfree communication function where a voice communication device according to the present invention is incorporated;
Fig.3 is a block diagram showing an embodiment (1) of a voice communication device according to the present invention shown in Fig.1;
Fig.4 is a time chart of volume adjustment amounts of a voice communication device according to the present invention shown in Fig.3;
Fig.5 is a time chart showing a difference between voice adjustment amounts of a prior art example and the present invention;
Fig.6 is a block diagram showing an embodiment (2) of a voice communication device according to the present invention shown in Fig. 1;
Fig.7 is a block diagram showing a prior art voice communication device which has been generally known;
Fig.8 is a block diagram showing a voice communication device that is an improved version of the voice communication device shown in the prior art example of Fig.7; and
Fig.9 is a diagram for illustrating a problem of a prior art technology.

Description of Reference Numerals

1 signal processing means
2 reproduction volume adjusting means (amplifier)
3 reproducing means (speaker)
4 recording means (microphone)
5 recording volume adjusting means (amplifier)
6 control means (controller)
7 transmission volume adjusting amplifier
8 reproduction volume setting portion
9 D/A converter

10 A/D converter
11 transmission volume setting portion

Throughout the figures, like reference numerals indicate like or corresponding components.

Best Mode for Carrying Out the Invention

Fig.2 shows a system arrangement where a voice communication device according to the present invention is incorporated. A handsfree function of an IP telephone software in a personal computer is incorporated into the voice communication device according to the present invention in a mobile telephone 100 connected to a public network 200. Namely, the mobile telephone 100 is provided with a voice communication device 103 receiving a received signal r(n) obtained through a decoder 102 which decodes a digital signal from a receiver 101 receiving an analog signal from the public network 200 to be converted into the digital signal, into the original code. This voice communication device 103 is for transmitting a transmitting signal s(n) encoded by the encoder 104 to the public network 200 after the signal is converted from the digital signal into the analog signal by a transmitter 105. An output sound V1 of the voice communication device 103 is provided to a talker 300 and a talker voice V2 from the talker 300 is received by the voice communication device 103.

Embodiment (1)

Fig.3 shows an arrangement of the above-mentioned voice communication device 103 in Fig.2 as well as an embodiment of the voice communication device shown in Fig.1.

Firstly, variables in the embodiment shown in Fig.3 are indicated in the following tables:

TABLE 1 EXPLANATION OF VARIABLE

| (1) | | | (2) | |
|---|---|---|---|---|
| **VARIABLE** | **CONTENT** | | **VARIABLE** | **CONTENT** |
| r(n) | RECEIVED SIGNAL | | X | REPRODUCTION VOLUME SET VALUE |
| s(n) | TRANSMITTING SIGNAL | | $\alpha$ (n) | REPRODUCTION VOLUME ADJUSTMENT AMOUNT (dB) |
| spe(n) | SPEAKER SIGNAL | | $\beta$ (n) | RECORDING VOLUME ADJUSTMENT AMOUNT (dB) |
| mic(n) | MICROPHONE SIGNAL | | $\gamma$ (n) | TRANSMISSION VOLUME ADJUSTMENT AMOUNT (dB) |
| in(n) | INPUT SIGNAL OF EC | | ERL(n) | ERL(dB) AT EC |
| out(n) | OUTPUT SIGNAL OF EC | | ERL0 | ACOUSTIC COUPLING AMOUNT (dB) BETWEEN SPEAKER & MICROPHONE |

Namely, in the voice communication device of this embodiment shown in Fig.1, an echo canceller (EC) is used as the signal processing means 1, and volume adjusting amplifiers are respectively used as the volume adjusting means 2 and 5. Also, a transmission volume adjusting amplifier (digital amplifier) 7 is used on the output side of the echo canceller 1. Furthermore, a D/A converter 9 is provided between the reproduction volume adjusting amplifier (digital amplifier) 2 and the speaker (reproduction means) 3, and an A/D converter 10 is provided between the microphone (recording means) 4 and the recording volume adjusting amplifier (digital amplifier) 5. Furthermore, for providing the reproduction volume set value X shown in Fig.1, a reproduction volume setting portion 8 is connected to the controller 6 as the control means.

In Fig.3, the controller 6 provides the reproduction volume adjustment amount $\alpha$ (n) [dB] to the reproduction volume adjusting amplifier 2 based on the reproduction volume set value X from the reproduction volume setting portion 8, for example, the received signal r(n) is amplified by $\alpha$ [dB] to assume the speaker signal spe(n). The speaker signal spe(n) is converted from the digital signal into the analog signal at the D/A converter 9 to be transmitted to the speaker 3. The speaker signal spe(n) at this time can be expressed by the following equation:

$$spe(n) = r(n) \times 10^{\alpha/20} \qquad \cdot\cdot\cdot \text{Eq.(7)}$$

On the other hand, the recording analog signal from the microphone 4 is converted into the digital signal mic (n) at the A/D converter 10 to be provided to the recording volume adjusting amplifier 5. To the recording volume adjusting amplifier 5, the recording volume adjustment amount β (n) [dB] is provided from the controller 6, so that the input of the recording volume adjusting amplifier 5 is amplified by the recording volume adjustment amount β (n) [dB] to be provided to the echo canceller 1 as the input signal in(n). The input signal in(n) at this time can be expressed by the following equation:

$$in(n) = mic(n) \times 10^{\beta/20} \qquad \cdot\cdot\cdot \text{Eq.(8)}$$

Furthermore, an output signal out(n) from the echo canceller 1 is transmitted to the transmission volume adjusting amplifier 7, to which a transmission volume adjustment amount γ [dB] is provided from the controller 6. Therefore, the output signal out(n) is amplified by the transmission volume adjustment amount γ (n) [dB], so that the transmitting signal s(n) is outputted to the opponent. The transmitting signal s(n) at this time can be expressed by the following equation:

$$s(n) = out(n) \times 10^{\gamma/20} \qquad \cdot\cdot\cdot \text{Eq.(9)}$$

At the reproduction volume setting portion 8, the talker 300 can select the reproduction volume set value during communication from among 5 stages (1-5). The initial value is set to "3". When the reproduction volume set value X is provided to the controller 6 from the reproduction volume setting portion 8, the controller 6 transmits the reproduction volume adjustment amount α (n) [dB] corresponding to the reproduction volume set value X to the reproduction volume adjusting amplifier 2. The relationship between the reproduction volume set value X and the reproduction volume adjustment amount α (n) [dB] is indicated in the following table:

TABLE 2 RELATIONSHIP BETWEEN REPRODUCTION VOLUME SETTING AND REPRODUCTION VOLUME ADJUSTMENT AMOUNT

| REPRODUCTION VOLUME SET VALUE X | REPRODUCTION VOLUME ADJUSTMENT AMOUNT α (n)[dB] |
|---|---|
| 5 | +12 |
| 4 | +6 |
| 3 | 0 |
| 2 | -6 |
| 1 | -12 |

The ERL(n) at the echo canceller 1 at this time can be expressed by the following equation:

$$ERL(n) = \alpha(n) + ERL_0 + \beta(n) \qquad \cdot\cdot\cdot \text{Eq.(10)}$$

Also, the recording volume adjustment amount β [dB] and the transmission volume adjustment amount γ (n) [dB] determined based on the reproduction volume set value X by the controller 6 can be obtained by the following equations:

$$\beta(n) = -\alpha(n) \quad \cdots \text{Eq.(11)}$$

$$\gamma(n) = -\beta(n) \quad \cdots \text{Eq.(12)}$$

Accordingly, if Eqs.(11) and (12) are substituted for the above-mentioned Eq.(10), the ERL(n) at the echo canceller 1 can be expressed by the following equation:

$$ERL(n) = \alpha(n) + ERL_0 + \left(-\alpha(n)\right) = ERL_0 \quad \cdots \text{Eq.(13)}$$

The meaning of this Eq.(13) will now be described. When the reproduction volume set value X is changed from "3" (0 dB) to "5" (12 dB) at the above-mentioned time "m", the reproduction volume adjustment amount α (n) [dB], the recording volume adjustment amount β (n) [dB], and the transmission volume adjustment amount γ (n) [dB] are respectively controlled as shown by Figs.4(1)-(3).

When the volume adjustment shown by the above-mentioned Eqs.(11) and Eq.(12) is not performed (prior art example), the ERL(n) [dB] at the echo canceller 1 is rapidly decreased from $ERL_0$ by 12 dB at the time "m".

On the other hand, when the volume adjustment shown in Eqs.(11) and (12) is performed, it is found by Eq.(13) that the ERL(n) [dB] at the echo canceller 1 becomes the fixed $ERL_0$ at all of the time points as shown in Fig.4(2).

Thus, if the volume adjustment of the voice communication device according to the present invention is performed, the ERL(n) is stabilized, and the operation of the echo canceller 1 is stably held, so that a good handsfree communication can be realized.

Embodiment (2)

Fig.6 shows an embodiment (2) that is a modification of the embodiment shown in Fig.3. The embodiment (2) is provided with a transmission volume setting portion 11 for setting a transmission volume set value Y in addition to the reproduction volume setting portion 8 for setting the set value X. Also, in the embodiment (1) of Fig.3, the D/A converter 9 is provided between the reproduction volume adjusting amplifier (digital amplifier) 2 and the speaker 3. However in this embodiment, different from the embodiment (1), the D/A converter 9 is moved to the preceding stage of the reproduction volume adjusting amplifier (analog amplifier) 2, and the A/D converter 10 is also moved to the interval between the recording volume adjusting amplifier (analog amplifier) 5 and the echo canceller 1 from the interval between the microphone 4 and the recording volume amplifier (digital amplifier) 5.

It is to be noted that also in the embodiment (2), like the above-mentioned embodiment (1) of Fig.3, the speaker signal spe(n) is expressed by the reproduction volume adjusting amplifier 2 according to Eq.(7), the input sound in(n) of the echo canceller 1 is expressed by the recording volume adjusting amplifier 5 according to Eq.(8), and the transmitting signal s(n) is expressed by the transmission volume adjusting amplifier 7 according to Eq.(9).

It is supposed in this embodiment (2) that the talker 300 can select the volume set values X and Y during communication from among 256 stages (0-255), and also the initial values of the reproduction volume adjustment amount α (n) and the recording volume adjustment amount β (n) are respectively set to values α (0) and β (0) in the reproduction volume setting portion 8 and the transmission volume setting portion 11.

Firstly, as for the reproduction volume set value X set by the reproduction volume setting portion 8, the controller 6 provides the reproduction volume adjustment amount α (n) [dB] corresponding to the reproduction volume set value X to the reproduction volume adjusting amplifier 2. The relationship between the reproduction volume set value X and the reproduction volume adjustment amount α (n) [dB] in this case is indicated in the following table:

TABLE 3 RELATIONSHIP BETWEEN REPRODUCTION VOLUME SET VALUE AND REPRODUCTION VOLUME ADJUSTMENT AMOUNT

| REPRODUCTION VOLUME SET VALUE X | REPRODUCTION VOLUME ADJUSTMENT AMOUNT α(n)[dB] |
|---|---|
| 255 | +20 |
| 254 | +19.84 |
| .<br>.<br>. | .<br>.<br>. |
| *X* | $-20+40\times\frac{X}{255}$ |
| .<br>.<br>. | .<br>.<br>. |
| 0 | -20 |

Also, the controller 6 obtains the recording volume adjustment amount β (n) [dB] by the following equation to be transmitted to the recording volume adjusting amplifier 5:

$$\beta(n) = -\left(\alpha(n) - \alpha(0)\right) + \beta(0) \qquad \cdot\cdot\cdot \text{Eq.}(14)$$

Furthermore, as for the transmission volume set value Y set by the transmission volume setting portion 11, the controller 6 determines the transmission volume adjustment amount γ (n) by the following equation based on the transmission volume set value Y, the above-mentioned reproduction volume adjustment amount α and the initial values α (0) and β (0), so that the transmission volume adjustment amount γ (n) is transmitted to the transmission volume adjusting amplifier 7:

$$\gamma(n) = \left(\alpha(n) - \alpha(0)\right) - \beta(0) + \delta(n) \qquad \cdot\cdot\cdot \text{Eq.}(15)$$

The relationship between the transmission volume set value Y in this case and a volume 6 (n) [dB] in the above-mentioned Eq.(15) corresponding to the set value Y is indicated in following table:

TABLE 4 RELATIONSHIP BETWEEN TRANSMISSION VOLUME SET VALUE AND CORRESPONDING VOLUME

| TRANSMISSION VOLUME SET VALUE Y | CORRESPONDING VOLUME δ (n) [dB] |
|---|---|
| 255 | +20 |
| 254 | + 19.84 |
| .<br>.<br>. | .<br>.<br>. |
| Y | $-20+40\times\frac{Y}{255}$ |
| .<br>.<br>. | .<br>.<br>. |
| 0 | -20 |

The ERL(n) in the echo canceller 1 in this case can be expressed by the following equation from the above-mentioned Eqs.(2) and (14):

$$ERL(n) = \alpha(n) + ERL_0 + \left(-\left(\alpha(n) - \alpha(0)\right) + \beta(0)\right) = \alpha(0) + ERL_0 + \beta(0) \quad \cdots \text{Eq.(16)}$$

Since the ERL(n) of the echo canceller 1 is expressed with $ERL_0$, α (0), and β (0) by the above-mentioned Eq. (16), it is found that ERL(n) does not depend on the reproduction volume adjustment amount α (n). Namely, even if the set value X for the reproduction volume adjustment amount α (n) is changed, the ERL(n) is not changed.

A level difference SML between the transmission volume s(n) and a microphone signal mic(n) can be expressed by the following equation:

$$SML = 10\log_{10}\left(s(n)^2\right) - 10\log_{10}\left(mic(n)^2\right) \quad \cdots \text{Eq.(17)}$$

If it is supposed that the echo canceller 1 does not influence the volume of the inputted voice of the talker 300, Eq.(17) can be expressed with the above-mentioned Eqs.(8) and (9) as follows:

$$SML = \beta(n) + \gamma(n) \quad \cdots \text{Eq.(18)}$$

If the above-mentioned Eqs.(14) and (15) are substituted for Eq.(18), the following equation can be expressed:

$$SML(n) = \left(-\left(\alpha(n) - \alpha(0)\right) + \beta(0)\right) + \left(\left(\alpha(n) - \alpha(0)\right) - \beta(0) + \delta(n)\right) = \delta(n) \quad \cdots \text{Eq.(19)}$$

Accordingly, by the above-mentioned Eq.(19), the level difference SML can be expressed only by the volume 6 (n) corresponding to the set value Y. Therefore, it has been confirmed that the level difference SML does not depend on the change of the reproduction volume adjustment amount α (n) and the reproduction volume set value X.

As mentioned above, according to the present invention, it becomes possible to realize an IP telephone software providing an optimum volume setting with respect to the following points:

(1) It becomes possible for a user to set a listenable volume for the user by adjusting the reproduction volume:
(2) Even if the reproduction volume is changed, the ERL(n) is fixed, so that the echo suppressing amount at the echo canceller can be kept from being reduced:
(3) Even if the reproduction volume is changed, the volume of the talker's voice transmitted to the opponent is unchanged:
(4) By adjusting the transmission volume, the volume of the talker's voice transmitted to the opponent can be set to a listenable volume for the opponent.

## Claims

**1.** A voice communication device comprising:

a first adjusting means adjusting a volume of a received signal;
a second adjusting means adjusting a volume of a transmitting signal including the received signal having passed through an echo path; and
a control means controlling an adjustment amount by the second adjusting means based on an adjustment amount by the first adjusting means.

**2.** The voice communication device as claimed in claim 1, wherein the control means controls the adjustment amount by the second adjusting means based on an absolute value or a change amount of the adjustment amount by the first adjusting means.

**3.** The voice communication device as claimed in claim 1 or 2, wherein the control means controls the adjustment amount by the second adjusting means based on an inverse number of the adjustment amount by the first adjusting means or in inverse proportion to the adjustment amount of the first adjusting means.

**4.** The voice communication device as claimed in claim 1, further comprising a signal processing means removing or suppressing an echo signal that is the received signal inputted to a transmission side through the echo path.

**5.** The voice communication device as claimed in claim 1, wherein the control means determines the adjustment amount by the first adjusting means based on a set volume of the received signal.

**6.** The voice communication device as claimed in claim 1, further comprising a third adjusting means adjusting the volume of the transmitting signal on an output side of the second adjusting means, the control means also determining an adjustment amount of the transmitting signal for the third adjusting means based on the adjustment amount of the first adjusting means.

**7.** The voice communication device as claimed in claim 6, wherein the control means controls the adjustment amount by the third adjusting means based on an inverse number of the adjustment amount by the second adjusting means or in inverse proportion to the adjustment amount by the second adjusting means.

**8.** The voice communication device as claimed in claim 6, wherein the control means changes the adjustment amount by the third adjusting means based on a set adjustment amount of the transmitting signal.

**9.** The voice communication device as claimed in claim 1, wherein each adjusting means comprises a digital amplifier or an analog amplifier.

FIG.1

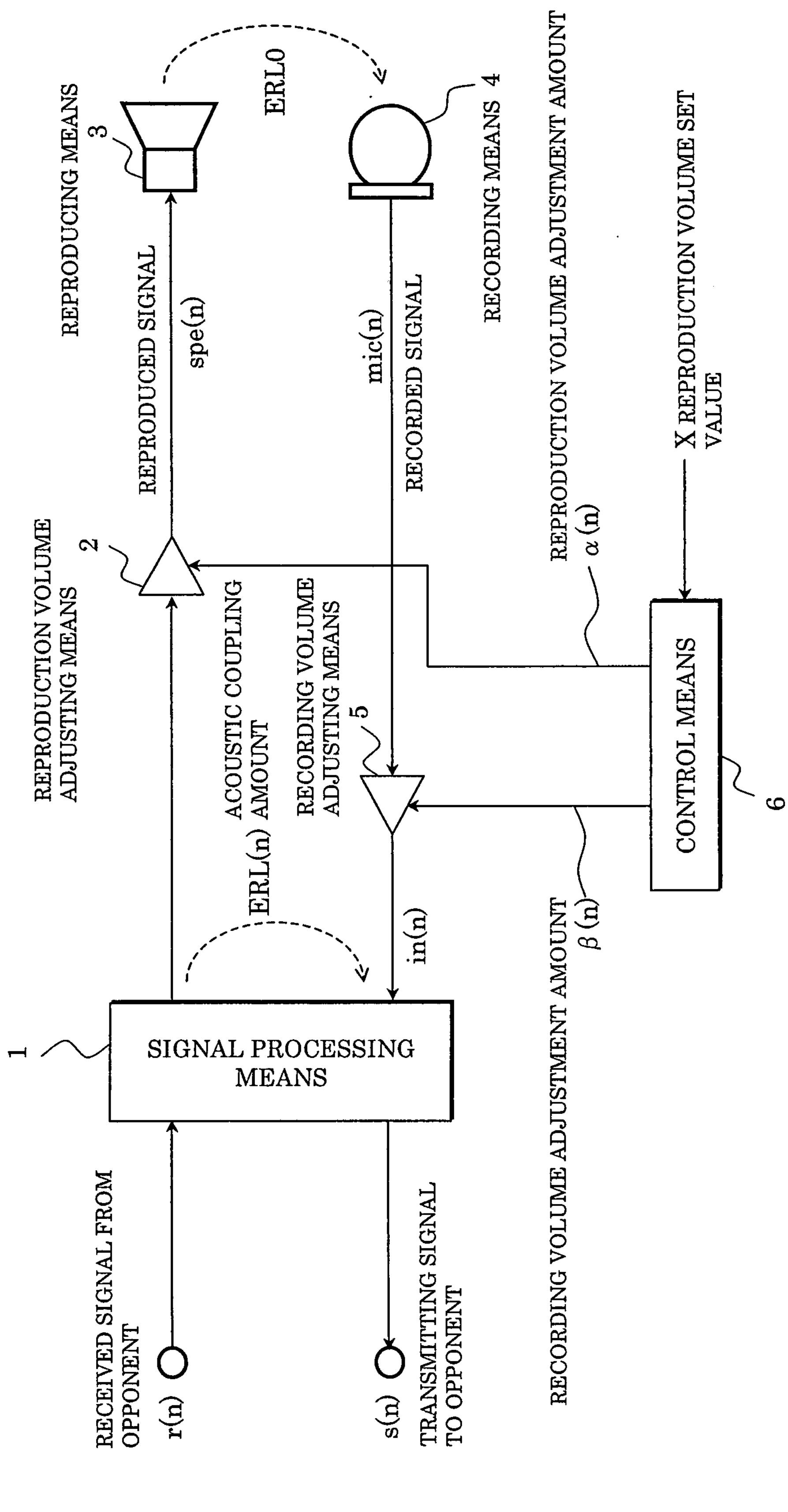
RECEIVED SIGNAL FROM OPPONENT
r(n)
s(n)
TRANSMITTING SIGNAL TO OPPONENT
1
SIGNAL PROCESSING MEANS
ERL(n)
ACOUSTIC COUPLING AMOUNT
in(n)
REPRODUCTION VOLUME ADJUSTING MEANS
2
RECORDING VOLUME ADJUSTING MEANS
5
REPRODUCED SIGNAL
spe(n)
REPRODUCING MEANS
3
ERL0
RECORDED SIGNAL
mic(n)
RECORDING MEANS 4
REPRODUCTION VOLUME ADJUSTMENT AMOUNT
α(n)
RECORDING VOLUME ADJUSTMENT AMOUNT
β(n)
CONTROL MEANS
6
X REPRODUCTION VOLUME SET VALUE

FIG.2

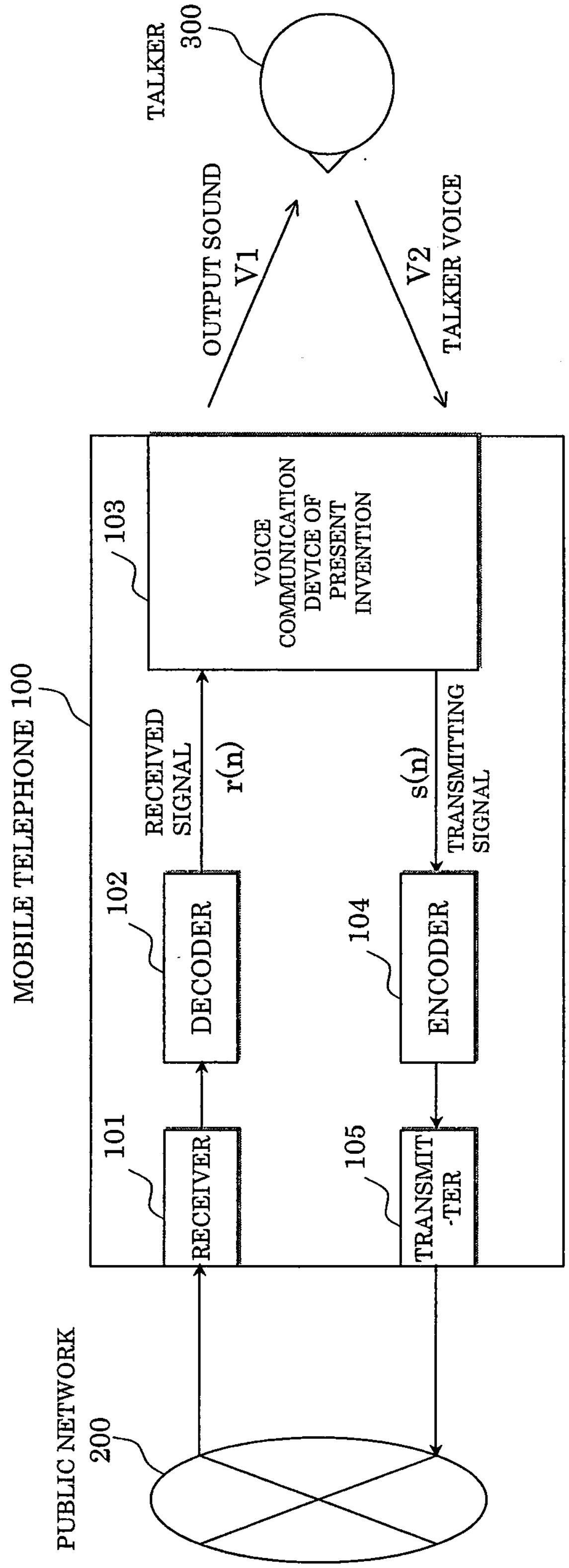
TALKER
300
OUTPUT SOUND
V1
V2
TALKER VOICE
MOBILE TELEPHONE 100
103
VOICE
COMMUNICATION
DEVICE OF
PRESENT
INVENTION
RECEIVED
SIGNAL
r(n)
s(n)
TRANSMITTING
SIGNAL
102
DECODER
104
ENCODER
101
RECEIVER
105
TRANSMIT
-TER
PUBLIC NETWORK
200

FIG.3

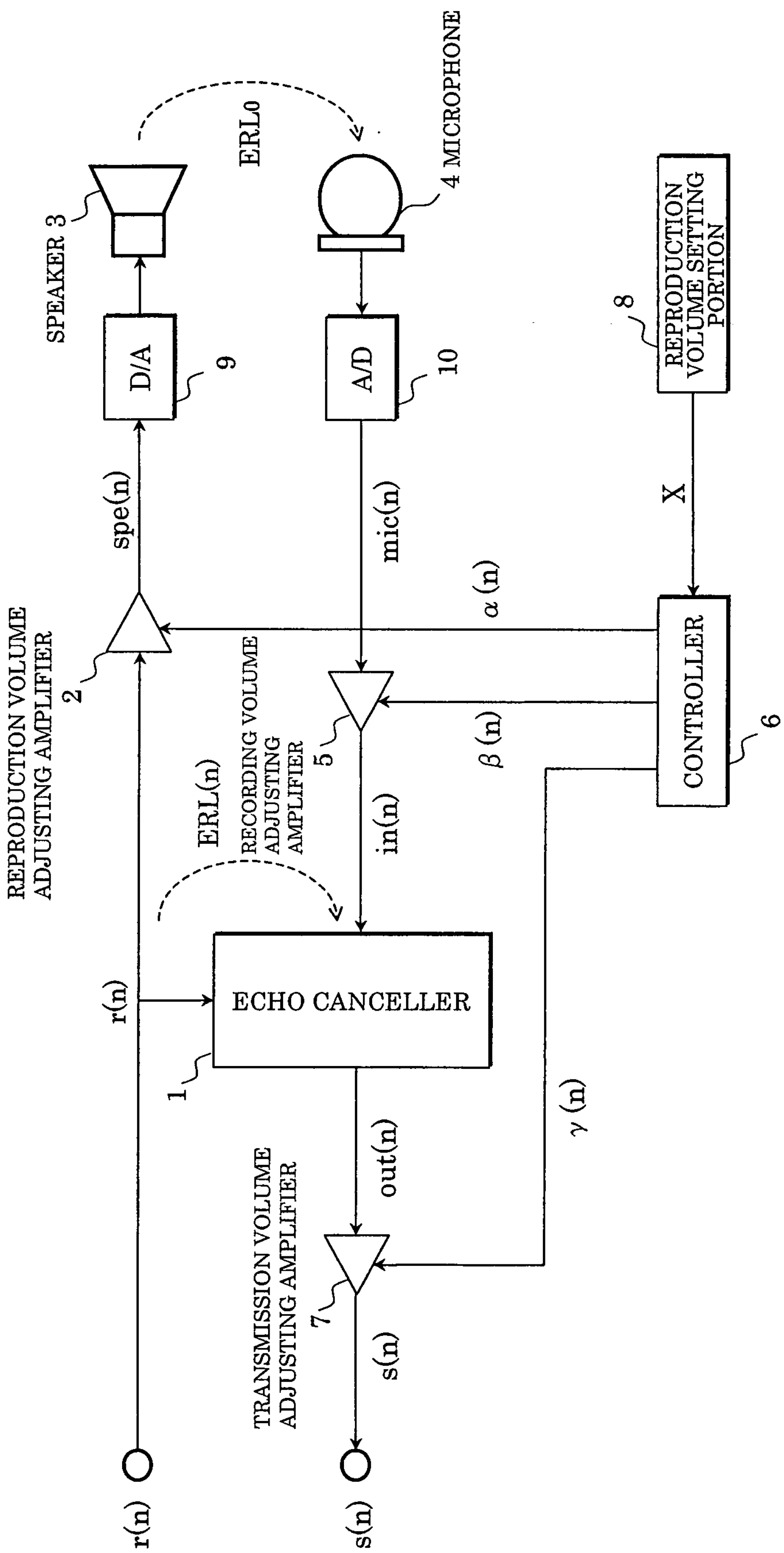
SPEAKER 3
ERL0
4 MICROPHONE
D/A
9
A/D
10
8
REPRODUCTION VOLUME SETTING PORTION
spe(n)
mic(n)
X
α (n)
β (n)
REPRODUCTION VOLUME ADJUSTING AMPLIFIER
2
RECORDING VOLUME ADJUSTING AMPLIFIER
5
CONTROLLER
6
ERL(n)
in(n)
r(n)
ECHO CANCELLER
1
γ (n)
out(n)
TRANSMISSION VOLUME ADJUSTING AMPLIFIER
7
s(n)
r(n)
s(n)

FIG.4

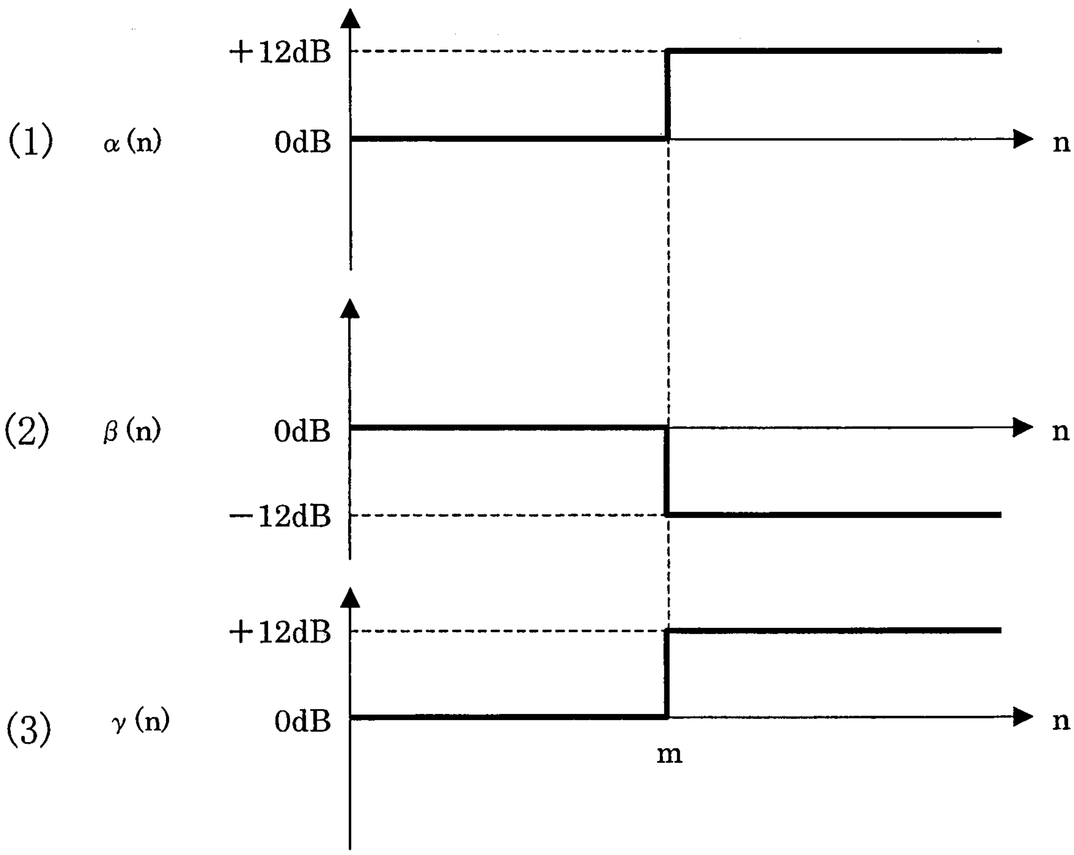

FIG.5

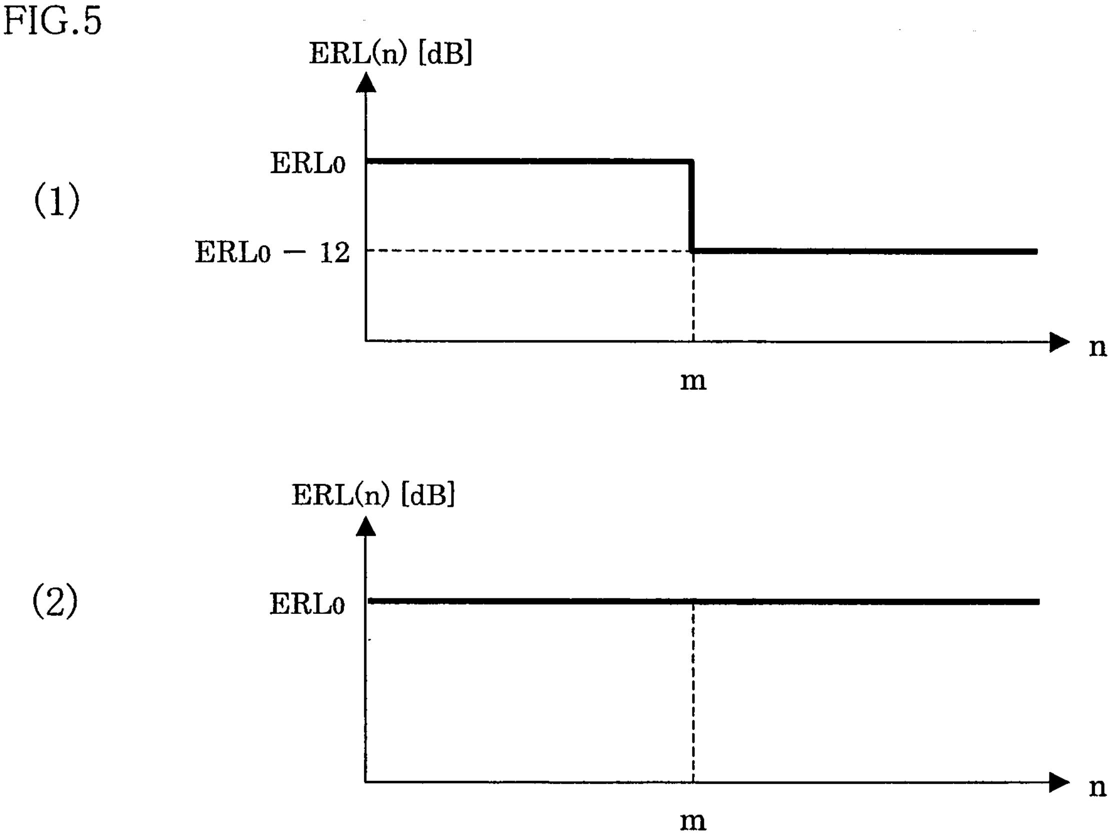

FIG.6

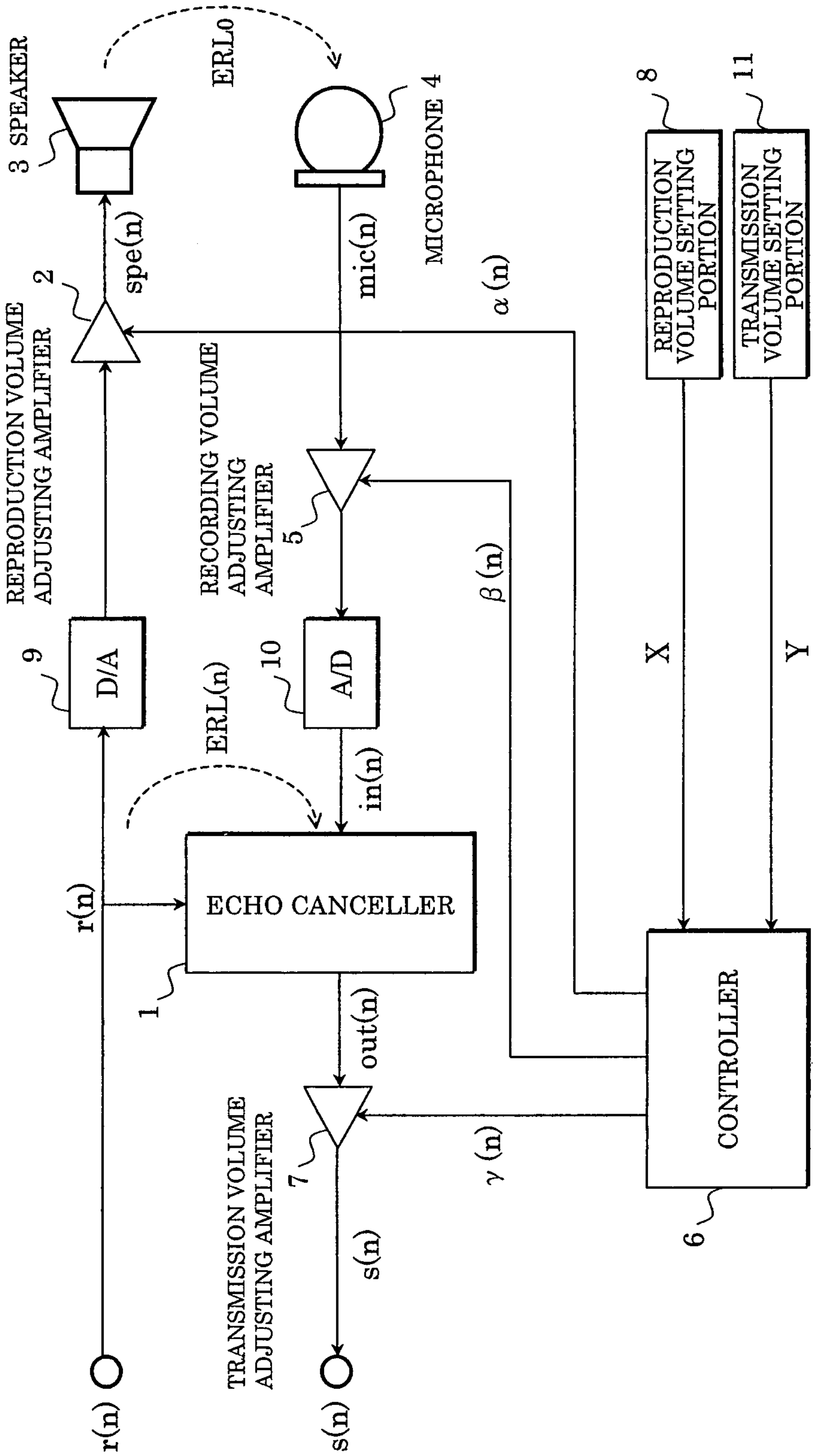
3 SPEAKER
ERL0
MICROPHONE 4
8
11
REPRODUCTION VOLUME SETTING PORTION
TRANSMISSION VOLUME SETTING PORTION
spe(n)
mic(n)
α(n)
2
REPRODUCTION VOLUME ADJUSTING AMPLIFIER
RECORDING VOLUME ADJUSTING AMPLIFIER
5
β(n)
X
Y
9
D/A
10
A/D
ERL(n)
in(n)
r(n)
ECHO CANCELLER
1
out(n)
CONTROLLER
TRANSMISSION VOLUME ADJUSTING AMPLIFIER
7
γ(n)
6
s(n)
r(n)
s(n)

FIG.7

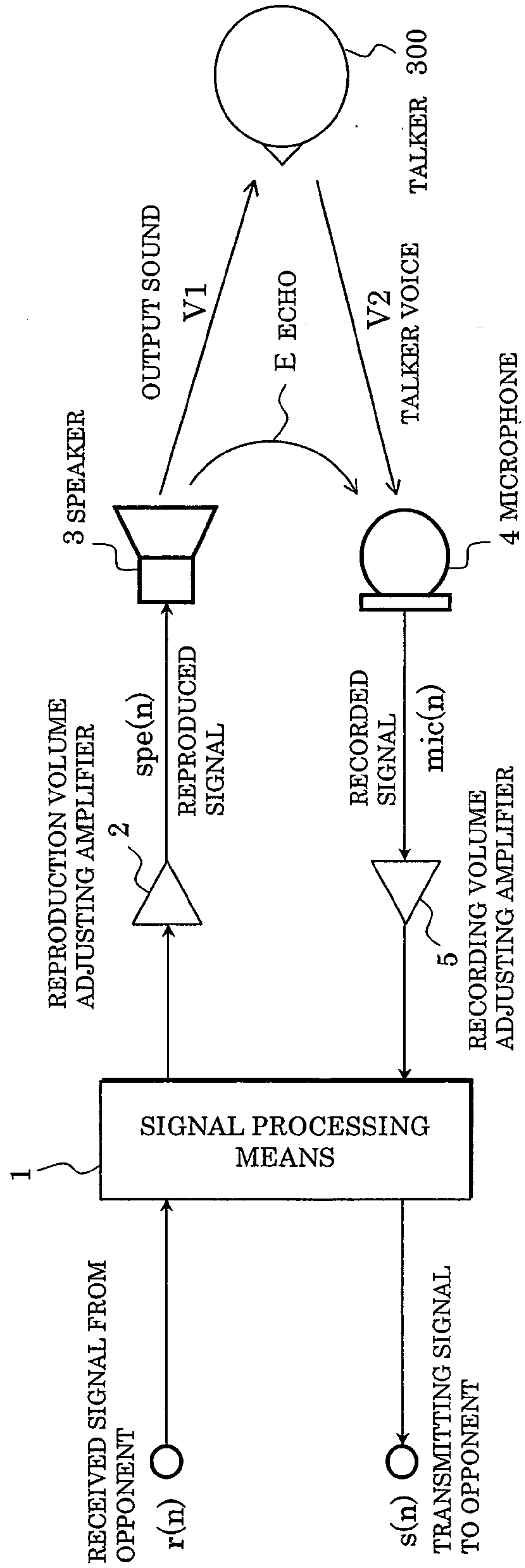
RECEIVED SIGNAL FROM OPPONENT
r(n)
s(n)
TRANSMITTING SIGNAL TO OPPONENT
1
SIGNAL PROCESSING MEANS
REPRODUCTION VOLUME ADJUSTING AMPLIFIER
2
spe(n)
REPRODUCED SIGNAL
RECORDED SIGNAL
mic(n)
5
RECORDING VOLUME ADJUSTING AMPLIFIER
3 SPEAKER
4 MICROPHONE
E ECHO
OUTPUT SOUND
V1
V2
TALKER VOICE
TALKER 300

FIG.8

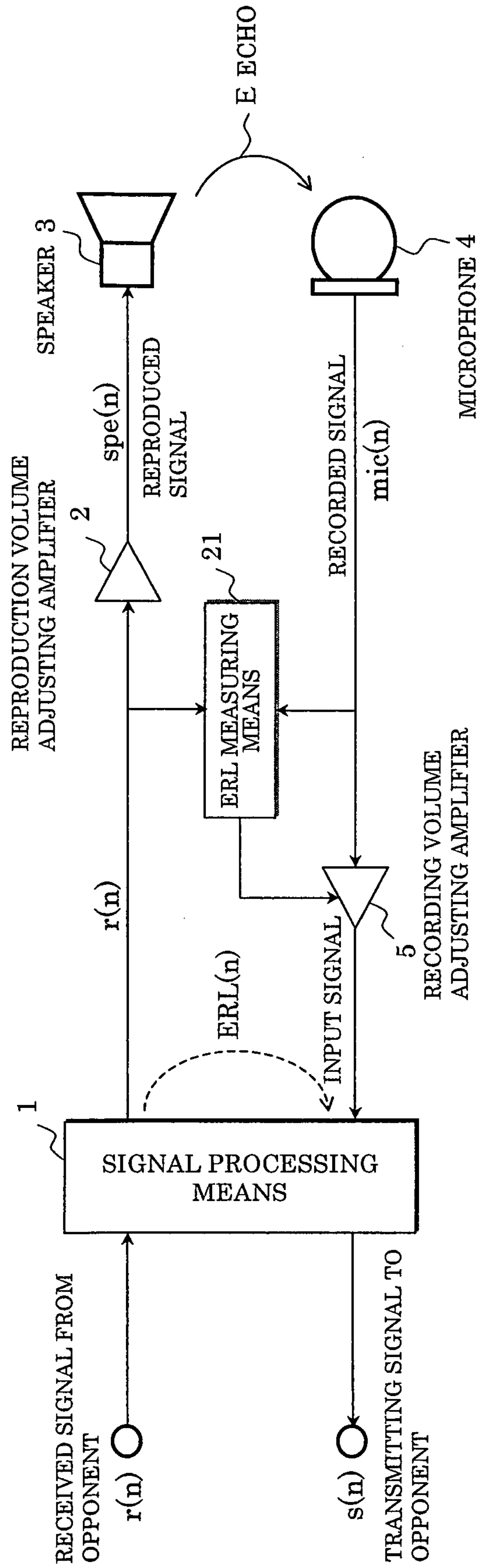
E ECHO
SPEAKER 3
MICROPHONE 4
REPRODUCTION VOLUME ADJUSTING AMPLIFIER
2
spe(n)
REPRODUCED SIGNAL
RECORDED SIGNAL
mic(n)
21
ERL MEASURING MEANS
RECORDING VOLUME ADJUSTING AMPLIFIER
5
r(n)
ERL(n)
INPUT SIGNAL
1
SIGNAL PROCESSING MEANS
RECEIVED SIGNAL FROM OPPONENT
r(n)
s(n)
TRANSMITTING SIGNAL TO OPPONENT

FIG.9

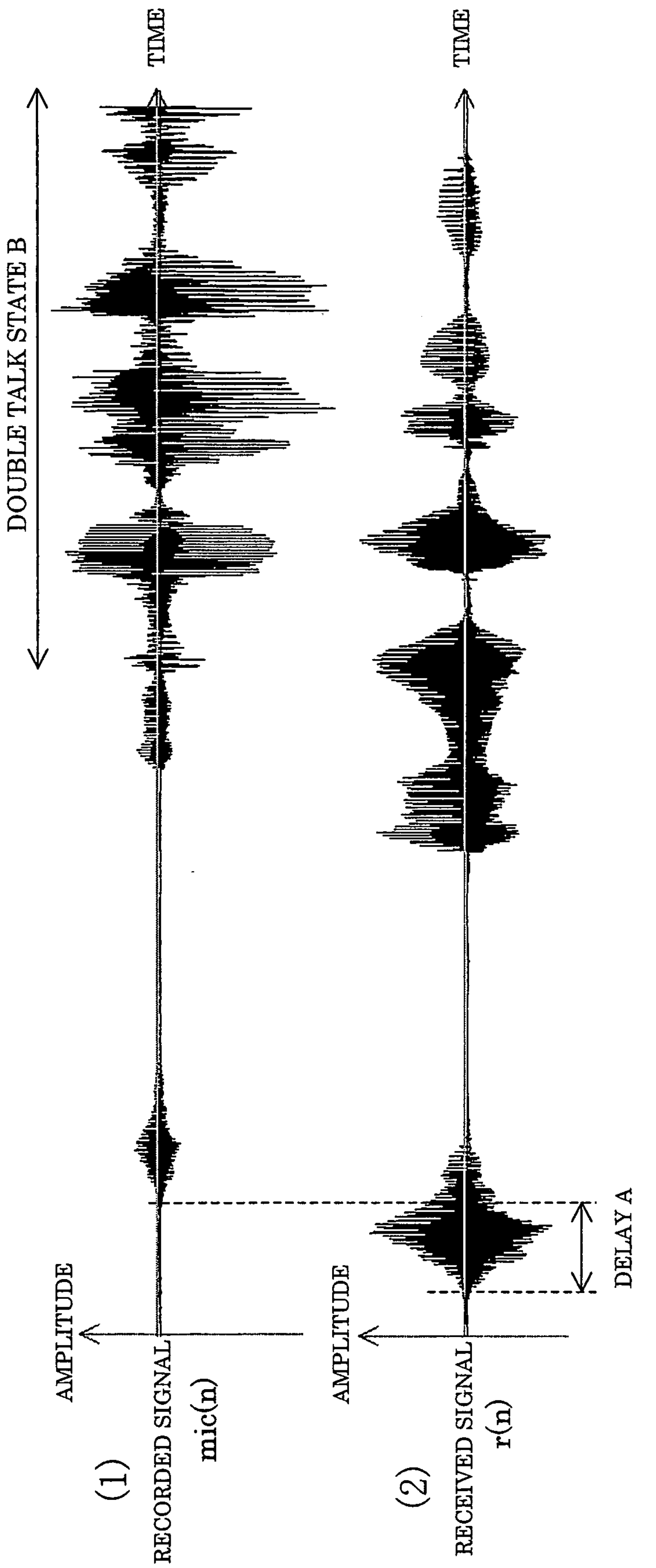
(1)
RECORDED SIGNAL
mic(n)
AMPLITUDE
TIME
DOUBLE TALK STATE B
(2)
RECEIVED SIGNAL
r(n)
AMPLITUDE
TIME
DELAY A

## INTERNATIONAL SEARCH REPORT

International application No.
PCT/JP2004/003613

A. CLASSIFICATION OF SUBJECT MATTER
Int.Cl$^7$ H04B3/20, H04M1/60

According to International Patent Classification (IPC) or to both national classification and IPC

B. FIELDS SEARCHED

Minimum documentation searched (classification system followed by classification symbols)
Int.Cl$^7$ H04B3/00, H04M1/00

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-077729 A (Oki Electric Industry Co., Ltd.),<br>23 March, 2001 (23.03.01),<br>Particularly, Fig. 2; Par. Nos. [0048], [0066] to [0074]<br>& EP 1083675 A2 & US 6694017 B1 | 1-5,9<br>6-8 |
| Y | JP 04-003629 A (Fujitsu Ltd.),<br>08 January, 1992 (08.01.92),<br>Particularly, Figs. 1, 2; page 3, lower left column, line 1 to lower right column, line 20<br>(Family: none) | 6-8 |

[X] Further documents are listed in the continuation of Box C.

[ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 May, 2004 (27.05.04) | Date of mailing of the international search report<br>15 June, 2004 (15.06.04) |
| Name and mailing address of the ISA/<br>Japanese Patent Office<br><br>Facsimile No. | Authorized officer<br><br>Telephone No. |

Form PCT/ISA/210 (second sheet) (January 2004)

**INTERNATIONAL SEARCH REPORT**

International application No.
PCT/JP2004/003613

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-044896 A (Matsushita Electric Industrial Co., Ltd.), 16 February, 2001 (16.02.01), Particularly, Fig. 1; Par. No. [0036] (Family: none) | 6-8 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001044896 A